# EUROPÄISCHE PATENTSCHRIFT

(11) **EP 2 956 321 B1**
(45) Veröffentlichungstag und Bekanntmachung des Hinweises auf die Patenterteilung: **25.01.2017**
(21) Anmeldenummer: 14733581.4
(22) Anmeldetag: 18.06.2014
(51) Int. Cl.: B60H 1/00, B61D 17/12, B61D 17/18, B61D 27/00, B61D 29/00

(54) **INNENDECKENANORDNUNG EINES SCHIENENFAHRZEUGS**
INNER CEILING ASSEMBLY OF A RAILWAY VEHICLE
AGENCEMENT DE PLAFOND INTÉRIEUR D'UN VÉHICULE FERROVIAIRE

(30) Priorität: 27.06.2013 DE 102013212454
(43) Veröffentlichungstag der Anmeldung: 23.12.2015
(73) Patentinhaber: Siemens Aktiengesellschaft, 80333 München (DE)
(72) Erfinder: MEERGANS, Ewald, 91126 Schwabach (DE); STEPHAN, Stefan, 1110 Wien (AT)
(86) Internationale Anmeldenummer: PCT/EP2014/062788
(87) Internationale Veröffentlichungsnummer: WO 2014/206823

(56) Entgegenhaltungen:
- WO-A1-2009/074531
- WO-A1-2012/156272
- DE-A1-102007 051 858
- DE-A1-102009 058 413
- DE-U1-202008 015 417

## Beschreibung

Die Erfindung betrifft ein Schienenfahrzeug mit einer Innendeckenanordnung, die als Komponenten wenigstens einen Luftkanal, mehrere Beleuchtungsmittel und wenigstens eine Deckenverkleidung umfasst, wobei der Luftkanal mit mehreren Luftaustrittsöffnungen versehen und zwischen einer Innenseite eines Dachs des Schienenfahrzeugs und der Deckenverkleidung angeordnet ist, und wobei die Deckenverkleidung mehrere Öffnungen zum Durchtritt von Luft aus den Luftaustrittsöffnungen des Luftkanals aufweist.

Die DE 10 2009 058 413 A1 zeigt eine Innendeckenanordnung eines Schienenfahrzeug des Personenverkehrs mit einer Deckenverkleidung, in welche zwei Lampenbänder integriert sind. Der Abstand der Lampenbänder ist durch die Breite eines Luftberührungsraums vorgegeben.

Der Erfindung liegt die Aufgabe zugrunde, eine homogenere Ausleuchtung des Innenraums eines Schienenfahrzeugs zu ermöglichen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug, insbesondere ein Schienenfahrzeug des Personenverkehrs, umfasst eine Innendeckenanordnung, die als Komponenten wenigstens einen Luftkanal, mehrere Beleuchtungsmittel und wenigstens eine Deckenverkleidung umfasst. Der Luftkanal ist mit mehreren Luftaustrittsöffnungen versehen und zwischen einer Innenseite eines Dachs des Schienenfahrzeugs und der Deckenverkleidung angeordnet. Die Deckenverkleidung weist mehrere Öffnungen auf, insbesondere zum Durchtritt von Luft aus den LuftaustrittsÖffnungen des Luftkanals. Die Luftaustrittsöffnungen des Luftkanals so zu den Öffnungen der Deckenverkleidung angeordnet sind, dass Luft des Luftkanals durch die Öffnungen der Deckenverkleidung tritt. Darüber hinaus sind die Beleuchtungsmittel erfindungsgemäß zwischen der Innenseite des Dachs des Schienenfahrzeugs und der Deckenverkleidung so angeordnet, dass auch Licht der Beleuchtungsmittel durch die Öffnungen der Deckenverkleidung tritt. Nicht zwingend ist, dass durch jede Öffnung der Deckenverkleidung Luft, sowie Licht tritt. Jedoch weist die Deckenverkleidung mehrere Öffnungen auf, durch welche sowohl Luft des Luftkanals, als auch Licht der Beleuchtungsmittel tritt. Die Deckenverkleidung dient des Weiteren der Verkleidung des wenigstens einen Luftkanals.

Die die erfindungsgemäße Anordnung der Beleuchtungsmittel und der Luftaustrittsöffnungen des Luftkanals zu den Öffnungen der Deckenverkleidung ist eine strikte Trennung von Belüftung und Beleuchtung aufgehoben. Deutlich verringerte Abstände von den Beleuchtungsmitteln zueinander und eine damit einhergehende, homogenere Ausleuchtung des Innenraums, beispielsweise eines Fahrgastraums des Schienenfahrzeugs, sind ermöglicht, ohne dabei die Belüftung des Innenraums des Schienenfahrzeugs einzuschränken.

Gemäß einer Weiterbildung der Erfindung sind die Öffnungen der Deckenverkleidung gleichmäßig über die Deckenverkleidung verteilt angeordnet.

Eine weitere Weiterbildung der Erfindung sieht vor, dass zwischen der Innenseite des Dachs des Schienenfahrzeugs und der Deckenverkleidung eine Trägerplatte für die Beleuchtungsmittel angeordnet ist, welche Öffnungen zur Luftführung von Luft aus den Luftaustrittsöffnungen des Luftkanals aufweist. Die Beleuchtungsmittel sind insbesondere so auf der Trägerplatte angeordnet, insbesondere in die Trägerplatte integriert, dass das Licht der Beleuchtungsmittel in Richtung einer der Innenseite des Dachs des Schienenfahrzeugs zugewandten Seite der Deckenverkleidung abgestrahlt wird. Die Trägerplatte ist insbesondere zwischen dem wenigstens einen Luftkanal und der Deckenverkleidung angeordnet. Ausgestaltungsgemäß sind die Öffnungen der Deckenverkleidung von Luft des luftkanals angeströmt und von Licht der Beleuchtungsmittel angestrahlt.

Die Deckenverkleidung ist weitergebildet so zu den Beleuchtungsmitteln angeordnet, dass sie einen Abstand von mindestens 10 mm, insbesondere mindestens 30 mm aufweist. Sind die Beleuchtungsmittel auf der Trägerplatte angeordnet, beträgt der Abstand zwischen der Trägerplatte und der Deckenverkleidung entsprechend mindestens 10 mm.

Durch die Wahl der Größe der Öffnungen der Deckenverkleidung und durch die Wahl des Abstands der Beleuchtungsmittel von der Deckenverkleidung und durch die Wahl der Größe der Beleuchtungsmittel kann eine indirekte Beleuchtung des zu beleuchtenden Raums erzielt werden. Beispielsweise sind die Beleuchtungsmittel so zu den Öffnungen der Deckenverkleidung angeordnet, dass der von den Beleuchtungsmitteln beleuchtete Raum, beispielsweise ein Fahrgastraum des Schienenfahrzeugs, unterhalb der Deckenverkleidung überwiegend indirekt beleuchtet ist.

Alternativ sind die Beleuchtungsmittel beispielsweise auf der der Innenseite des Dachs des Schienenfahrzeugs zugewandten Seite der Deckenverkleidung angeordnet, so dass Licht in Richtung der Innenseite des Dachs des Schienenfahrzeugs abgestrahlt wird. Durch Reflexionen tritt dennoch Licht der Beleuchtungsmittel durch die Öffnungen der Deckenverkleidung. Auch hier kann von indirekter Beleuchtung gesprochen werden.

In einer weiteren Ausführungsform ist vorgesehen, dass zwischen den Beleuchtungsmitteln und der Deckenverkleidung eine Milchglasscheibe angeordnet ist. Die Beleuchtungsmittel sind beispielsweise auf der Trägerplatte angeordnet und Licht wird in Richtung der Deckenverkleidung abgestrahlt. Um eine weiche Beleuchtung des Innenraums des Schienenfahrzeugs zu erzielen, und damit einen ähnlichen Effekt hervorzurufen, wie bei einer indirekten Beleuchtung, wird ein bedingt transparentes Material, beispielsweise ein phototropes oder elektrotropes Glas, insbesondere in Form einer Scheibe, zwischen die Beleuchtungsmittel und die Deckenverkleidung angeordnet. Das Milchglas umfasst beispielsweise ein Polycarbonat.

Bei den Beleuchtungsmitteln handelt es sich insbesondere um Lichtemittierende Dioden, kurz LED.

Weitergebildet weist das Schienenfahrzeug einen Spalt zwischen der Deckenverkleidung und zumindest einer Innenseite einer Seitenwand des Schienenfahrzeugs auf, wobei sowohl die Beleuchtungsmittel, als auch die Luftaustrittsöffnungen des Luftkanals so zu dem Spalt zwischen der Deckenverkleidung und zumindest einer Innenseite einer Seitenwand des Schienenfahrzeugs angeordnet sind, dass sowohl Luft des Luftkanals, als auch Licht der Beleuchtungsmittel durch den Spalt zwischen der Deckenverkleidung und der Innenseite der Seitenwand des Schienenfahrzeugs tritt. Auch hier kann Licht der Beleuchtungsmittel nicht direkt in den Innenraum des Schienenfahrzeugs abgestrahlt werden, sondern beispielsweise in Richtung der Innenseite der Seitenwand des Schienenfahrzeugs, wodurch der Innenraum des Schienenfahrzeugs wiederum indirekt beleuchtet werden würde.

Die Deckenverkleidung und die Beleuchtungsmittel bilden weitergebildet eine montagefähige Einheit. Diese ist entsprechend vor einem Einbau in das Schienenfahrzeug vormontiert. Insbesondere wird die Decke des Schienenfahrzeugs aus mehreren baugleichen Einheiten zusammengesetzt, sogenannte Deckenverkleidungsmodule. Diese können neben der Deckenverkleidung und den integrierten Beleuchtungsmitteln Mittel zur Befestigung der gesamten Einheit, insbesondere am Dach des Schienenfahrzeugs, aufweisen, sowie Mittel zum elektrischen Anschluss der Beleuchtungsmittel. Gegebenenfalls sind auch die gesamte Elektrik und Elektronik für die Beleuchtungsmittel und eventuelle Steckverbindungen integriert. Solch eine montagefähige Einheit wird beispielsweise während ihrer kompletten Montage lediglich angeschraubt und angesteckt.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine erste Ausgestaltung einer erfindungsgemäßen Innendeckenanordnung für ein Schienenfahrzeug im Querschnitt,
- Fig. 2: zeigt eine weitere Ausgestaltung einer Innendeckenanordnung für ein Schienenfahrzeug im Querschnitt.

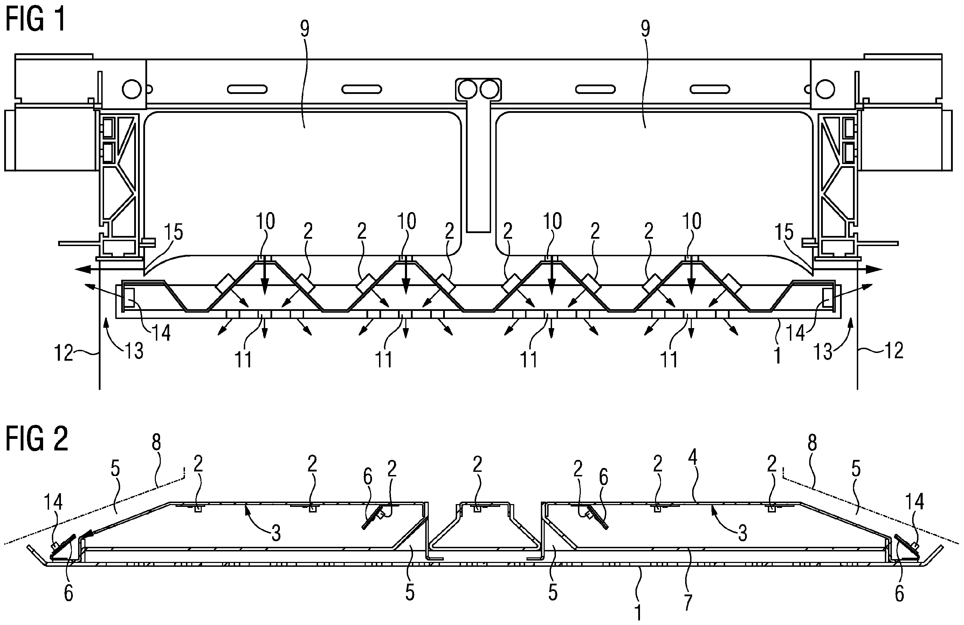

Fig. 1 veranschaulicht schematisch eine erste Ausgestaltung einer erfindungsgemäßen Innendeckenanordnung für ein Schienenfahrzeug in montiertem Zustand im Querschnitt. Der Querschnitt verläuft senkrecht zur Längsachse des Schienenfahrzeugs.

Die Innendeckenanordnung umfasst eine Deckenverkleidung 1 und zwei Luftkanäle 9, welche parallel zur Längsachse des Schienenfahrzeugs führen, wobei sie zwischen einer Innenseite eines Dachs des Schienenfahrzeugs und der Deckenverkleidung 1 angeordnet sind und mit mehreren Luftaustrittsöffnungen 10 versehen sind. Die Deckenverkleidung 1 ist hier eben ausgebildet.

Zwischen den Luftkanälen 9 und der Deckenverkleidung 1 ist Trapezblech als Trägerplatte 4 angeordnet. Im Querschnitt weist die Trägerplatte 4 die Form von vier nebeneinanderliegenden, gleichschenkligen Trapezen auf.

Die Trägerplatte 4 weist im gezeigten Querschnitt vier nebeneinanderliegende Öffnungen zur Luftführung von Luft aus den Luftaustrittsöffnungen des Luftkanals auf, welche mit den Luftaustrittsöffnungen 10 der zwei Luftkanäle 9 fluchtend angeordnet sind, so dass die Luft aus den Luftkanälen 9 durch die Öffnungen in der Trägerplatte 4 tritt. Die Öffnungen in der Trägerplatte 4 wurden der Übersichtlichkeit wegen nicht mit Bezugszeichen versehen. Sie sind jeweils auf der oberen Grundseite der gleichschenkligen Trapeze angeordnet, mit welchen oberen Grundseiten die Trägerplatte 4 hier die Luftkanäle 9 berührt.

Zusätzlich sind mehrere Beleuchtungsmittel 2 auf der Trägerplatte 4 angeordnet. Die Beleuchtungsmittel 2 sind hier an den Schenkeln der gleichschenkligen Trapeze angeordnet und emittieren Licht in Richtung der Deckenverkleidung 1. Die gleichschenkligen Trapeze weisen jeweils eine nach unten offene untere Grundseite auf. Diese untere Grundseite wird auch Basis genannt. Sie sind somit zur Deckenverkleidung 1 hin offen ausgestaltet.

Die Deckenverkleidung 1 ist ebenfalls mit vielen Öffnungen 11 versehen, durch welche Luft der Luftkanäle 4, sowie Licht der Beleuchtungsmittel 2 tritt, was jeweils mit Pfeilen angedeutet ist. Sowohl die Beleuchtungsmittel 2, als auch die Luftaustrittsöffnungen 10 der Luftkanäle 9 sind entsprechend zu den Öffnungen 11 der Deckenverkleidung 1 angeordnet. Die Deckenverkleidung 1, die Trägerplatte 4 und die Beleuchtungsmittel 2 bilden eine montagefähige Einheit.

Die hier skizzierte Innendeckenanordnung ist zwischen Seitenwänden 12 des Schienenfahrzeugs so angeordnet, dass auf beiden Seiten der Deckenverkleidung 1 Spalte 13 zwischen den Innenseiten der Seitenwände 12 des Schienenfahrzeugs und der Deckenverkleidung 1 bestehen. Einige Beleuchtungsmittel 14, sowie auch einige Luftaustrittsöffnungen 15 der Luftkanäle 9 sind so zu den Spalten 13 angeordnet, dass sowohl Luft der Luftkanäle 9, als auch Licht der Beleuchtungsmittel 15 durch die Spalte 13 tritt. Der Innenraum des Schienenfahrzeugs unterhalb der Deckenverkleidung 1, insbesondere ein Fahrgastraum, wird dadurch indirekt beleuchtet. Die Spalte 13 gelten als Öffnungen der Deckenverkleidung.

In Fig. 2 ist eine weitere erfindungsgemäße Innendeckenanordnung für ein Schienenfahrzeug im Querschnitt dargestellt. Sie umfasst in einer montagefähigen Einheit zusammengefasst eine Deckenverkleidung 1, eine Milchglasscheibe 7 und eine Trägerplatte 4 mit Beleuchtungsmitteln 2, 14. Als Beleuchtungsmittel 2, 14 dienen insbesondere LEDs. Teilweise sind diese an Trägerplattenfortsätzen 6 angeordnet, um die Intensität der Beleuchtung des Schienenfahrzeugs weiter zu beeinflussen oder um die Montage der Beleuchtungsmittel 2, 14 an der Trägerplatte 4 zu erleichtern. Die Trägerplatte 4 ist auf ihrer der Deckenverkleidung 1 zugewandten Seite 3 lichtreflektierend beschichtet ausgeführt, was zu einer höheren Lichtausbeute führt. Die Milchglasscheibe 7 ist lichtdurchlässig, aber undurchlässig und zwischen den Beleuchtungsmitteln 2 und der Deckenverkleidung 1 angeordnet. Die Beleuchtungsmittel 2 emittieren Licht in Richtung der Milchglasscheibe 7. Durch sie wird das Licht der Beleuchtungsmittel 2 zur Deckenverkleidung 1 transmittiert. Sie verhindert jedoch den direkten Blick in die Beleuchtungsmittel 2 vom Innenraum des Schienenfahrzeugs. Die Beleuchtungsmittel 14 sind so auf Trägerplattenfortsätzen 6 angeordnet, dass sie Licht nur indirekt in den Innenraum des Schienenfahrzeugs emittieren.

Sie weisen in Richtung von Luftführungsblechen 8, welche zur Luftführung der Luft aus einem Luftkanal dienen. Die Luftführungsbleche 8 bilden mit den ihnen gegenüberliegenden Außenseiten der Trägerplatte 4 Luftführungen 5. Nicht gezeichnet ist der Luftkanal, welcher über der Trägerplatte 4 angeordnet ist, und welcher Luftaustrittsöffnungen aufweist, welche Luft aus dem Luftkanal in die Luftführungen 5 der Innendeckenanordnung führt. Zwei weitere Luftführungen 5 führen Luft aus dem Luftkanal zwischen die Milchglasscheibe 7 und die Deckenverkleidung 1. Zusätzlich sind Öffnungen in der Milchglasscheibe 7 zum Durchtritt von Luft aus dem Luftkanal 9 vorgesehen, durch welche diese Luftführungen 5 führen.

Die Deckenverkleidung 1 ist hier perforiert, was jedoch der Fig.2 nicht unmittelbar zu entnehmen ist. Die Luft aus den Luftaustrittsöffnungen des Luftkanals, welche mittels der Luftführungen 5 zwischen die Milchglasscheibe 7 und die Deckenverkleidung 1 geführt ist, sowie das Licht der Beleuchtungsmittel 2 tritt somit durch die Öffnungen der Deckenverkleidung 1.

## Patentansprüche

1. Schienenfahrzeug mit einer Innendeckenanordnung, die als Komponenten wenigstens einen Luftkanal (9), mehrere Beleuchtungsmittel (2, 14) und wenigstens eine Deckenverkleidung (1) umfasst, wobei der Luftkanal (9) zwischen einer Innenseite eines Dachs des Schienenfahrzeugs und der Deckenverkleidung (1) angeordnet ist und mit mehreren Luftaustrittsöffnungen (10, 15) versehen ist und wobei die Deckenverkleidung (1) mehrere Öffnungen (11) aufweist, und wobei die Beleuchtungsmittel (2, 14) zwischen der Innenseite des Dachs des Schienenfahrzeugs und der Deckenverkleidung (1) angeordnet sind, **dadurch gekennzeichnet, dass** sowohl Beleuchtungsmittel (2), als auch Luftaustrittsöffnungen (10) des Luftkanals (9) so zu den Öffnungen (11) der Deckenverkleidung (1) angeordnet sind, dass sowohl Luft des Luftkanals (9), als auch Licht der Beleuchtungsmittel (2) durch die Öffnungen der Deckenverkleidung (1) tritt.

2. Schienenfahrzeug nach Anspruch 1, **dadurch gekennzeichnet, dass** die Öffnungen (11) der Deckenverkleidung (1) gleichmäßig verteilt über die Deckenverkleidung (1) angeordnet sind.

3. Schienenfahrzeug nach einem der Ansprüche 1 oder 2, **dadurch gekennzeichnet, dass** es eine Trägerplatte (4) umfasst, welche zwischen dem wenigstens einen Luftkanal (9) und der Deckenverkleidung (1) angeordnet ist, und welche Öffnungen zur Luftführung von Luft aus den Luftaustrittsöffnungen (11) des Luftkanals (9) aufweist, und welche die Beleuchtungsmittel (2, 14) trägt.

4. Schienenfahrzeug nach Anspruch 3, **dadurch gekennzeichnet, dass** ein Abstand zwischen der Trägerplatte (4) und der Deckenverkleidung (1) mindestens 10 mm beträgt.

5. Schienenfahrzeug nach einem der Ansprüche 1 bis 4, **dadurch gekennzeichnet, dass** zwischen den Beleuchtungsmitteln (2) und der Deckenverkleidung (1) eine Milchglasscheibe (7) angeordnet ist.

6. Schienenfahrzeug nach einem der Ansprüche 1 bis 5, **dadurch gekennzeichnet, dass** die Beleuchtungsmittel (2, 14) so zu den Öffnungen (11) der Deckenverkleidung (1) angeordnet sind, dass der von den Beleuchtungsmitteln (2, 14) beleuchtete Raum, unterhalb der Deckenverkleidung (1) überwiegend indirekt beleuchtet ist.

7. Schienenfahrzeug nach einem der Ansprüche 1 bis 6, **dadurch gekennzeichnet, dass** sowohl die Beleuchtungsmittel (14), als auch die Luftaustrittsöffnungen (15) des Luftkanals (9) so zu einem Spalt (13) zwischen der Deckenverkleidung (1) und zumindest einer Innenseite einer Seitenwand (12) des Schienenfahrzeugs angeordnet sind, dass sowohl Luft des Luftkanals (9), als auch Licht der Beleuchtungsmittel (14) durch den Spalt tritt.

8. Schienenfahrzeug nach einem der Ansprüche 1 bis 7, **dadurch gekennzeichnet, dass** die Deckenverkleidung (1) und die Beleuchtungsmittel (2) eine montagefähige Einheit bilden.

## Claims

1. Rail-borne vehicle having an inner ceiling assembly that comprises as components at least one air duct (9), multiple illuminating means (2, 14) and at least one ceiling cladding (1), wherein the air duct (9) is arranged between an inner face of a roof of the rail-borne vehicle and the ceiling cladding (1) and is provided with multiple air outlet openings (10, 15) and wherein the ceiling cladding (1) comprises multiple openings (11), and wherein the illuminating means (2, 14) are arranged between the inner face of the roof of the rail-borne vehicle and the ceiling cladding (1), **characterized in that** both the illuminating means (2) and also the air outlet openings (10) of the air duct (9) are arranged with respect to the openings (11) of the ceiling cladding (1) in such a manner that both air from the air duct (9) and also light from the illuminating means (2) passes through the openings of the ceiling cladding (1).

2. Rail-borne vehicle according to Claim 1, **characterized in that** the openings (11) of the ceiling cladding (1) are arranged distributed in a uniform manner over the ceiling cladding (1).

3. Rail-borne vehicle according to Claim 1 or 2, **characterized in that** it comprises a carrier plate (4) that is arranged between the at least one air duct (9) and the ceiling cladding (1) and that comprises openings so as to convey air from the air outlet openings (11) of the air duct (9) and that supports the illuminating means (2, 14).

4. Rail-borne vehicle according to Claim 3, **characterized in that** a spacing between the carrier plate (4) and the ceiling cladding (1) amounts to at least 10 mm.

5. Rail-borne vehicle according to any one of Claims 1 to 4, **characterized in that** a frosted glass pane (7) is arranged between the illumination means (2) and the ceiling cladding (1).

6. Rail-borne vehicle according to any one of Claims 1 to 5, **characterized in that** the illuminating means (2, 14) are arranged with respect to the openings (11) of the ceiling cladding (1) in such a manner that the compartment that is illuminated by the illuminating means (2, 14) is to a great extent illuminated indirectly below the ceiling cladding (1).

7. Rail-borne vehicle according to any one of Claims 1 to 6, **characterized in that** both the illuminating means (14) and also the air outlet openings (15) of the air duct (9) are arranged with respect to a gap (13) between the ceiling cladding (1) and at least one of an inner face of a side wall (12) of the rail-borne vehicle in such a manner that both air from the air duct (9) and also light from the illuminating means (14) pass through the gap.

8. Rail-borne vehicle according to any one of Claims 1 to 7, **characterized in that** the ceiling cladding (1) and the illuminating means (2) form an easy-to-assemble unit.

## Revendications

1. Véhicule ferroviaire ayant un agencement de plafond intérieur, qui comprend comme composants au moins un conduit ( 9 ) pour de l'air, plusieurs moyens ( 2, 14 ) d'éclairage et au moins un habillage ( 1 ) de plafond, le conduit ( 9 ) pour de l'air étant disposé entre une face intérieure d'un toit du véhicule ferroviaire et l'habillage ( 1 ) de plafond et étant pourvu de plusieurs ouies ( 10, 15 ) de sortie d'air et l'habillage ( 1 ) de plafond ayant plusieurs ouvertures ( 11 ) et dans lequel les moyens ( 2, 14 ) d'éclairage sont disposés entre la face intérieure du plafond du véhicule ferroviaire et l'habillage ( 1 ) du plafond,
**caractérisé en ce qu'**à la fois des moyens ( 2 ) d'éclairage et des ouies ( 10 ) de sortie d'air du conduit ( 9 ) pour de l'air sont disposés, par rapport aux ouvertures (11) de l'habillage ( 1 ) du plafond, de manière à ce qu'à la fois de l'air du conduit ( 9 ) pour de l'air et de la lumière des moyens ( 2 ) d'éclairage passent par les ouvertures de l'habillage ( 1 ) du plafond.

2. Véhicule ferroviaire suivant la revendication 1,
**caractérisé en ce que** les ouvertures ( 11 ) de l'habillage ( 1 ) du plafond sont réparties uniformément sur l'habillage ( 1 ) du plafond.

3. Véhicule ferroviaire suivant l'une des revendications 1 ou 2,
**caractérisé en ce qu'**il comprend une plaque ( 4 ) de support qui est disposée entre le au moins un conduit ( 9 ) pour de l'air et l'habillage ( 1 ) du plafond et qui a des ouvertures pour conduire de l'air provenant des ouies (11) de sortie d'air du conduit ( 9 ) pour de l'air et qui porte les moyens ( 2, 14 ) d'éclairage.

4. Véhicule ferroviaire suivant la revendication 3,
**caractérisé en ce qu'**une distance entre la plaque ( 4 ) de support et l'habillage ( 1 ) du plafond est d'au moins 10 mm.

5. Véhicule ferroviaire suivant l'une des revendications 1 à 4,
**caractérisé en ce qu'**une vitre en verre opale est disposée entre les moyens ( 2 ) d'éclairage et l'habillage ( 1 ) de plafond.

6. Véhicule ferroviaire suivant l'une des revendications 1 à 5,
**caractérisé en ce que** les moyens ( 2, 14 ) d'éclairage sont disposés, par rapport aux ouvertures (11) de l'habillage ( 1 ) de plafond, de manière à ce que l'espace éclairé par les moyens ( 2, 14 ) d'éclairage soit, en dessous de l'habillage ( 1 ) du plafond, éclairé d'une manière prépondérante indirectement.

7. Véhicule ferroviaire suivant l'une des revendications 1 à 6,
**caractérisé en ce qu'**à la fois les moyens ( 14 ) d'éclairage et les ouies ( 15 ) de sortie d'air du conduit ( 9 ) pour de l'air sont disposés, par rapport à l'intervalle ( 13 ) entre l'habillage ( 1 ) du plafond et au moins une face intérieure d'une paroi ( 12 ) latérale du véhicule ferroviaire, de manière à ce qu'à la fois de l'air du conduit ( 9 ) pour de l'air et de la lumière des moyens ( 14 ) d'éclairage passent par l'intervalle.

8. Véhicule ferroviaire suivant l'une des revendications 1 à 7,
**caractérisé en ce que** l'habillage ( 1 ) de plafond et les moyens ( 2 ) d'éclairage forment une unité de montage.
